# EUROPEAN PATENT APPLICATION

(11) **EP 4 135 406 A1**
(43) Date of publication of application: **15.02.2023**
(21) Application number: 21783739.2
(22) Date of filing: 02.04.2021
(51) Int. Cl.: H04W 40/12, H04W 40/20, H04W 40/22, H04W 76/11, H04W 76/14

(54) **PATH SELECTION METHOD AND APPARATUS FOR DIRECT LINK, AND STORAGE MEDIUM, UE AND RELAY**

(30) Priority: 09.04.2020 CN 202010275489
(71) Applicant: Spreadtrum Communications (Shanghai) Co., Ltd., Shanghai 201203 (CN)
(72) Inventor: LIU, Xing, Shanghai 201203 (CN)
(74) Representative: Nordmeyer, Philipp Werner
(86) International application number: PCT/CN2021/085159
(87) International publication number: WO 2021/204066

(57) **Abstract**

A path selection method and apparatus for a direct link, and a storage medium, a UE and a relay. The method comprises: generating path request signaling, the path request signaling comprising position information of a target UE; sending the path request signaling to one or more surrounding relays, so that the relay receiving the path request signaling determines whether to forward the path request signaling at least according to the position information of the target UE; and receiving reply signaling sent by the target UE, the reply signaling being signaling generated by the target UE in response to the path request signaling forwarded by each relay and used to indicate a target relay used for message forwarding when communicating with a requesting UE. The method can prevent a relay that is not suitable for participating in path selection from participating in signaling forwarding, thereby saving resources and reducing communication interference.

## Description

### CROSS-REFERENCE TO RELATED APPLICATIONS

This application claims priority to Chinese Patent Application No. 202010275489.9, filed on April 9, 2020, and entitled "METHOD AND APPARATUS FOR SELECTING PATH OF SIDELINK, STORAGE MEDIUM, UE, AND RELAY", the entire disclosure of which is incorporated herein by reference.

### TECHNICAL FIELD

The present disclosure generally relates to communication field, and more particularly, to a method and apparatus for selecting a path of a sidelink, a storage medium, a User Equipment (UE), and a relay.

### BACKGROUND

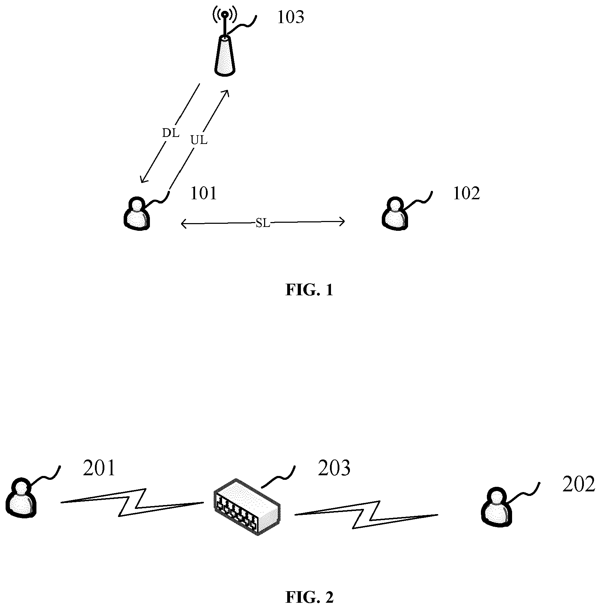

In a traditional cellular network, referring to FIG 1. FIG 1 is a schematic diagram of communication of a cellular network and thing-to-thing direct communication in existing techniques. When a UE (also referred to as a terminal equipment) 101 communicates with a base station equipment 103, a link therebetween is called uplink (UL) or downlink (DL), and an interface therebetween is called a Uu interface. Thing-to-thing direct communication technology or sidelink (SL) communication technology is different from ordinary wireless cellular network communication. In SL communication technology, the UE 101 directly communicates with the UE 102, a link therebetween is called an SL, and an interface therebetween is called a PC5 interface.

To expand a communication distance of SL, a relay is introduced between UEs, which is responsible for forwarding data between the UEs, i.e., a UE-to-UE Relay. Referring to FIG 2. FIG 2 is a communication diagram of SL in the existing techniques. A UE 201 and a UE 202 communicate via a relay 203 which forwards received data sent by a sender to a receiver, thereby expanding a transmission range of the sender.

In the existing techniques, there may be multiple relays that can forward communication between a sender and a receiver in SL communication, and relays participating in the communication are obtained through path selection during actual communication. In an existing path selection method, a sender sends path request signaling which reaches a receiver through one or more relays. However, the inventor found through research that when each relay forwards the path request signaling to the receiver, it is always determined whether to forward based on link situation between the relay and the sender, which may cause some relays not suitable for participating in path selection to also forward the signaling, resulting in a waste of resources and interference to other UEs.

### SUMMARY

Embodiments of the present disclosure may prevent relays not suitable for participating in path selection from forwarding signaling, so as to save resources and reduce communication interference.

In an embodiment of the present disclosure, a method for selecting a path of a sidelink is provided, including: generating path request signaling, wherein the path request signaling includes position information of a target UE; sending the path request signaling to one or more surrounding relays, so that at least one relay that receives the path request signaling determines whether to forward the path request signaling at least based on the position information of the target UE; and receiving reply signaling from the target UE, wherein the reply signaling is generated by the target UE in response to the path request signaling forwarded by each of the at least one relay, and indicates a target relay used for message forwarding in communication with a requesting UE.

Optionally, the position information of the target UE includes latitude and longitude information of the target UE, and/or a zone ID of the target UE in the sidelink.

Optionally, the at least one relay that receives the path request signaling determines whether to forward the path request signaling further based on one or more of following conditions: requirements on quality of service in the path request signaling, a load situation of the relay, and quality of a link between the requesting UE and the relay.

Optionally, in response to receiving the path request signaling forwarded by a plurality of relays, the target UE determines one or more relays from the plurality of relays as the target relay.

Optionally, the target UE selects the target relay at least based on quality of a link with each of the plurality of relays.

Optionally, the path request signaling is generated based on signal strength with the target UE being lower than a signal threshold.

Optionally, when a plurality of target relays are indicated in the reply signaling, one or more target relays are selected from the plurality of target relays, so as to communicate with the target UE via the selected one or more target relays.

In an embodiment of the present disclosure, a method for selecting a path of a sidelink is provided, including: receiving path request signaling sent by a requesting UE, wherein the path request signaling is generated by the requesting UE and sent to one or more relays surrounding the requesting UE, and includes position information of a target UE; determining whether to forward the path request signaling at least based on the position information of the target UE; forwarding the path request signaling to the target UE based on determining to forward the path request signaling, so that the target UE generates and sends reply signaling in response to the path request signaling, wherein the reply signaling indicates a target relay used for message forwarding in communication between the requesting UE and the target UE.

Optionally, the position information of the target UE includes latitude and longitude information of the target UE and/or a zone ID of the target UE in the sidelink.

Optionally, the method further includes: determining whether to forward the path request signaling based on one or more of following conditions: requirements on quality of service in the path request signaling, a load situation of a current relay, and quality of a link between the requesting UE and the current relay.

Optionally, following forwarding the path request signaling to the target UE, the method further includes: receiving reply signaling from the target UE in response to being selected as the target relay by the target UE; and forwarding the reply signaling to the requesting UE.

In an embodiment of the present disclosure, a method for selecting a path of a sidelink is provided, including: receiving path request signaling forwarded by one or more relays, wherein the path request signaling is generated by a requesting UE, sent to one or more relays surrounding the requesting UE and forwarded by the one or more relays, and includes position information of a target UE; generating reply signaling in response to the path request signaling forwarded by the one or more relays, wherein the reply signaling indicates a target relay used for message forwarding in communication between the requesting UE and the target UE; and sending the reply signaling to the requesting UE, wherein the relay receiving the path request signaling determines whether to forward the path request signaling at least based on the position information of the target UE.

Optionally, the position information of the target UE includes longitude and latitude information of the target UE and/or a zone ID of the target UE in the sidelink.

Optionally, the method further includes: selecting at least one relay from the one or more relays as the target relay.

Optionally, the at least one relay is selected from the one or more relays as the target relay based on quality of a link with each of the one or more relays.

In an embodiment of the present disclosure, an apparatus for selecting a path of a sidelink is provided, including: a path request triggering circuitry configured to generate path request signaling, wherein the path request signaling includes position information of a target UE; a path requesting circuitry configured to send the path request signaling to one or more surrounding relays, so that at least one relay that receives the path request signaling determines whether to forward the path request signaling at least based on the position information of the target UE; and a request completing circuitry configured to receive reply signaling from the target UE, wherein the reply signaling is generated by the target UE in response to the path request signaling forwarded by each of the at least one relay, and indicates a target relay used for message forwarding in communication with a requesting UE.

In an embodiment of the present disclosure, an apparatus for selecting a path of a sidelink is provided, including: a path request signaling receiving circuitry configured to receive path request signaling sent by a requesting UE, wherein the path request signaling is generated by the requesting UE and sent to one or more relays surrounding the requesting UE, and includes position information of a target UE; a forward selecting circuitry configured to determine whether to forward the path request signaling at least based on the position information of the target UE; a path request signaling forwarding circuitry configured to forward the path request signaling to the target UE based on determining to forward the path request signaling, so that the target UE generates and sends reply signaling in response to the path request signaling, wherein the reply signaling indicates a target relay used for message forwarding in communication between the requesting UE and the target UE.

In an embodiment of the present disclosure, an apparatus for selecting a path of a sidelink is provided, including: a path request signaling receiving circuitry configured to receive path request signaling forwarded by one or more relays, wherein the path request signaling is generated by a requesting UE, sent to one or more relays surrounding the requesting UE and forwarded by the one or more relays, and includes position information of a target UE; a reply signaling generating circuitry configured to generate reply signaling in response to the path request signaling forwarded by the one or more relays, wherein the reply signaling indicates a target relay used for message forwarding in communication between the requesting UE and the target UE; and a reply signaling sending circuitry configured to send the reply signaling to the requesting UE, wherein the relay receiving the path request signaling determines whether to forward the path request signaling at least based on the position information of the target UE.

In an embodiment of the present disclosure, a storage medium having computer instructions stored therein is provided, wherein when the computer instructions are executed by a processor, any one of the above methods is performed.

In an embodiment of the present disclosure, a UE including the apparatus, or including a memory and a processor is provided, wherein the memory has computer instructions stored therein, and when the processor executes the computer instructions, any one of the above methods is performed.

In an embodiment of the present disclosure, a relay including the apparatus, or including a memory and a processor is provided, wherein the memory has computer instructions stored therein, and when the processor executes the computer instructions, any one of the above methods is performed.

Embodiments of the present disclosure may provide following advantages.

Embodiments of the present disclosure provide a method for selecting a path of a sidelink, including: generating path request signaling, wherein the path request signaling includes position information of a target UE; sending the path request signaling to one or more surrounding relays, so that at least one relay that receives the path request signaling determines whether to forward the path request signaling at least based on the position information of the target UE; and receiving reply signaling from the target UE, wherein the reply signaling is generated by the target UE in response to the path request signaling forwarded by each of the at least one relay, and indicates a target relay used for message forwarding in communication with a requesting UE. In the embodiments, the path request signaling sent by the requesting UE includes the position information of the target UE, so that the relay receiving the path request signaling can determine whether to forward the path request signaling based on the position information of the target UE. The relay does not forward the signaling based on not suitable for participating in path selection, thereby avoiding a resource waste and interference to other UEs.

Further, in response to the requesting UE receiving the reply signaling forwarded by a plurality of target relays, that is, a plurality of suitable relays are available for UE1 and UE2 to communicate, UE1 needs to further select the relay used during communication. Optionally, UE1 may select a relay for communication based on quality of the links with the plurality of target relays or the load condition of the plurality of target relays when the UE1 is in communication.

### BRIEF DESCRIPTION OF THE DRAWINGS

FIG 1 is a schematic diagram of communication of a cellular network and thing-to-thing direct communication in existing techniques;
FIG 2 is a communication diagram of SL in the existing techniques;
FIG 3 is a diagram of path reselection in the existing techniques;
FIG 4 is a diagram of relay selection in the existing techniques;
FIG 5 is a flow chart of a method for selecting a path of a sidelink according to an embodiment;
FIG 6 is a flow chart of a method for selecting a path of a sidelink according to an embodiment;
FIG 7 is a flow chart of a method for selecting a path of a sidelink according to an embodiment;
FIG 8 is a structural diagram of an apparatus for selecting a path of a sidelink according to an embodiment;
FIG 9 is a structural diagram of an apparatus for selecting a path of a sidelink according to an embodiment; and
FIG 10 is a structural diagram of an apparatus for selecting a path of a sidelink according to an embodiment.

### DETAILED DESCRIPTION

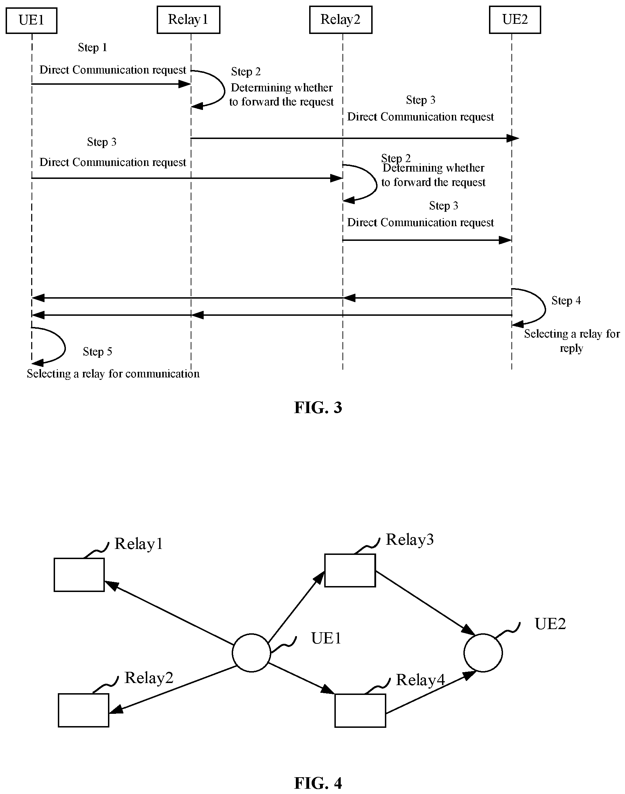

According to the background, in the existing techniques, when each relay forwards path request signaling to a receiver, it is always determined whether to forward the signaling according to the link situation between the relay and the sender. In the existing UE-to-UE relay, the relay can set up connections with UEs at both ends respectively. However, when the UE or the relay moves, it may lead to a need to reselect a relay, that is, to reselect a path. Referring to FIG 3, FIG 3 is a diagram of path reselection in the existing techniques. Communication between UE1 and UE2 is realized via a relay, and UE1 is surrounded by relay 1 (indicated by Relay1 in FIG 3) and relay 2 (indicated by Relay2 in FIG 3). Path reselection between UE1 and UE2 includes following steps.

In step 1, UE1 sends a direct communication request to Relay1 and Relay2 respectively. For triggering path selection, UE1 may be pre-configured with some trigger path selection conditions, for example, signal strength between UE1 and UE2 being lower than a threshold, UE1 triggering the path selection, or broadcasting a signal for finding UE2 to surrounding Relay 1 and Relay2, such as a direct communication request in FIG 3.

In step 2, Relay1 and Relay2 determine whether to forward the request.

In step 3, the UE1 selects a relay that forwards the signaling to start request forwarding. At this time, both Relay1 and Relay2 forward.

In step 4, UE2 that receives the forwarded signaling selects the replying Relay (replying to both Relay1 and Relay2 in FIG 3). UE2 selects one or more from the received signaling to reply, for example, the Relay with best link quality between UE2 and the relay may be selected to reply, and the Relay forwards the reply to UE1 after receiving the reply.

In step 5, when UE2 feeds back multiple suitable relays, UE1 needs to further select a suitable relay for communication, which step is selected to be performed or not performed according to needs.

After completing the path reselection based on the above steps 1 to 5, UE1 and UE2 perform normal unicast communication. Data of UE1 is all sent to the selected relay which then forwards the data to UE2, or the data of UE2 is all sent to the selected Relay which then forwards the date to UE1.

According to the path selection in FIG 3, it can be seen that in step 2, the relay determines whether to forward the signaling only based on the link situation between UE1 and the Relay, which may cause some Relays not suitable for participating in the selection to also forward the signaling, resulting in a waste of resources and interference to other UEs. Referring to FIG 4, FIG 4 is a diagram of relay selection in the existing techniques. Relay 1, Relay2, Relay3 and Relay4 all participate in the selection and forward the signaling, however, it can be seen that Relay 1 and Relay2 do not need to forward the signaling in step 2 as they are both very far from UE2.

In response to this problem, embodiments of the present disclosure provide a method for selecting a path of a sidelink. The method includes: generating path request signaling, wherein the path request signaling includes position information of a target UE; sending the path request signaling to one or more surrounding relays, so that at least one relay that receives the path request signaling determines whether to forward the path request signaling at least based on the position information of the target UE; and receiving reply signaling from the target UE, wherein the reply signaling is generated by the target UE in response to the path request signaling forwarded by each of the at least one relay, and indicates a target relay used for message forwarding in communication with a requesting UE.

The method may prevent relays not suitable for participating in path selection from forwarding signaling, so as to save resources and reduce communication interference.

In order to clarify the objects, characteristics and advantages of the disclosure, embodiments of present disclosure will be described in detail in conjunction with accompanying drawings.

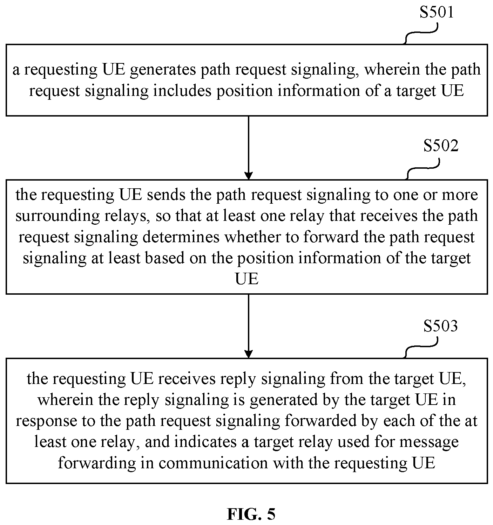

FIG 5 is a flow chart of a method for selecting a path of a sidelink according to an embodiment. The method includes S501, S502 and S503.

In S501, a requesting UE generates path request signaling, wherein the path request signaling includes position information of a target UE.

If UE1 and UE2 have set up a connection therebetween, they can acquire position information of each other. When UE1 finds that quality of a link communicating with UE2 is relatively low, UE1 needs to find a new relay to assist in communication. In this case, UE1 as the requesting UE triggers path selection, and generates path request signaling. The requesting UE may inform the relay of the position information of UE2 (i.e., the target UE), so that the Relay can more accurately determine whether to forward the path request signaling according to the position information of the target UE.

The path request signaling at least includes the position information of the target UE which is used for identifying a position of the target UE, where the position information may be any form of position information in any position coordinate system.

Optionally, the path request signaling may be a direct communication request in FIG 3.

Optionally, the position information of the target UE includes longitude and latitude information of the target UE and/or a zone ID of the target UE in the sidelink. For example, it may be the latitude and longitude received through GPS, or the zone ID introduced in the sidelink communication.

Optionally, the path request signaling may further carry position information of the requesting UE.

In S502, the requesting UE sends the path request signaling to one or more surrounding relays, so that at least one relay that receives the path request signaling determines whether to forward the path request signaling at least based on the position information of the target UE.

The requesting UE sends the path request signaling to one or more surrounding relays, so that at least one relay that receives the path request signaling determines whether to forward the path request signaling to the target UE based on the position information of the target UE.

Optionally, the requesting UE may send the path request signaling to all surrounding relays by broadcasting.

Optionally, each relay that receives the path request signaling can obtain position of UE2 according to the position information of the target UE, and forwards it merely when a distance between the target UE and the relay is shorter than a threshold. The threshold here is predefined, configured or dynamically changed, for example, the threshold may be equal to a distance between the requesting UE and the target UE.

In S503, the requesting UE receives reply signaling from the target UE, wherein the reply signaling is generated by the target UE in response to the path request signaling forwarded by each of the at least one relay, and indicates a target relay used for message forwarding in communication with the requesting UE.

When receiving the path request signaling forwarded by one or more relays, the target UE selects the path request signaling of one or more relays to reply, and a reply message is called reply signaling which is used to indicate a relay (i.e., the target relay) that forwards messages I communication between the requesting UE and the target UE. The requesting UE may communicate with the target UE according to the target relay indicated in the reply signaling.

It should also be noted that, in the embodiments of the present disclosure, the reply signaling may be directly sent by the target UE to the requesting UE, or may be forwarded to the requesting UE by the target relay. After selecting the target relay, the target UE may send the reply signaling to the target relay, and after receiving the reply signaling from the target UE, the target relay forwards it to the requesting UE.

It should be noted that, in the embodiments of the present disclosure, the signaling before forwarding (such as path request signaling or reply signaling) by the relay and the signaling after forwarding (such as path request signaling or reply signaling) by the relay may be the same or different, and may contain the same information or different information. In the method in the embodiments, for the thing-to-thing direct communication involving relays, the path request signaling sent by the requesting UE includes the position information of the target UE, so that the relay receiving the path request signaling can determine whether to forward the path request signaling according to the position information of the target UE. If the relay is not suitable for participating in path selection, the relay does not forward the signaling, thereby avoiding a resource waste and interference to other UEs.

In some embodiments, the at least one relay that receives the path request signaling determines whether to forward the path request signaling further based on one or more of following conditions: requirements on quality of service in the path request signaling, a load situation of the relay, and quality of a link between the requesting UE and the relay.

After receiving the path request signaling from the requesting UE, in addition to determining whether to forward the path request signaling based on the position information of the target UE, the relay determines whether to forward the path request signaling further based on the requirements on quality of service in the path request signaling, the load situation of the relay, and the quality of the link between the requesting UE and the relay.

Optionally, in response to receiving the path request signaling forwarded by a plurality of relays, the target UE determines one or more relays from the plurality of relays as the target relay.

Optionally, the target UE selects the target relay at least based on quality of a link with each of the plurality of relays.

That is, the target UE selects, based on quality of the link with each of the plurality of relays, a relay with the highest quality of the link as the target relay. The target relay may include one or more relays.

In some embodiments, the path request signaling is generated based on signal strength with the target UE being lower than a signal threshold.

Specifically, the UE may be preconfigured with some conditions for triggering path selection, for example, when the signal strength between UE1 and UE2 is lower than a certain threshold, UE1 triggers path selection and generates the path request signaling, where the threshold is set according to actual needs.

In some embodiments, when a plurality of target relays are indicated in the reply signaling, one or more target relays are selected from the plurality of target relays, so as to communicate with the target UE via the selected one or more target relays.

When the target UE feeds back a plurality of suitable relays for communication between UE1 and UE2, UE1 needs to further select the relay used in the communication.

Optionally, UE1 may select a relay for communication based on quality of a link between UE1 and each relay or a load situation of the relay in communication.

The method as shown in FIG 5 is performed by UE1 (i.e., the requesting UE) when sidelink communication is performed between UE1 and UE2 through a relay.

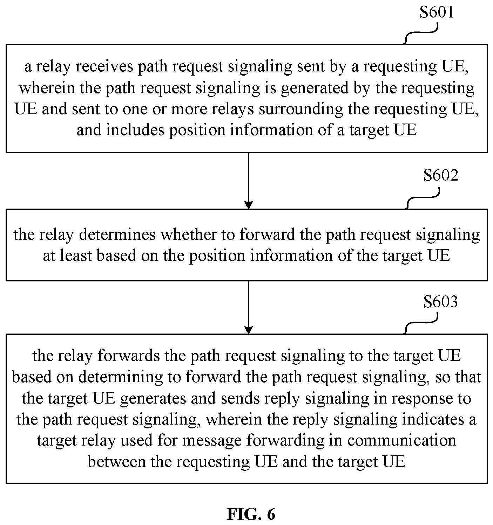

FIG 6 is a flow chart of a method for selecting a path of a sidelink according to an embodiment. The method includes S601, S602 and S603.

In S601, a relay receives path request signaling sent by a requesting UE, wherein the path request signaling is generated by the requesting UE and sent to one or more relays surrounding the requesting UE, and includes position information of a target UE.

In S602, the relay determines whether to forward the path request signaling at least based on the position information of the target UE.

In S603, the relay forwards the path request signaling to the target UE based on determining to forward the path request signaling, so that the target UE generates and sends reply signaling in response to the path request signaling, wherein the reply signaling indicates a target relay used for message forwarding in communication between the requesting UE and the target UE.

Optionally, the position information of the target UE includes latitude and longitude information of the target UE and/or a zone ID of the target UE in the sidelink.

In some embodiments, the method further includes: determining whether to forward the path request signaling based on one or more of following conditions: requirements on quality of service in the path request signaling, a load situation of a current relay, and quality of a link between the requesting UE and the current relay.

In some embodiments, following S603, the method further includes: receiving reply signaling from the target UE in response to being selected as the target relay by the target UE; and forwarding the reply signaling to the requesting UE.

The reply signaling may be directly sent by the target UE to the requesting UE, or forwarded by the target relay. When a relay is selected as the target relay by the target UE, the selected relay may forward the reply signaling sent by the target UE to the requesting UE.

The method as shown in FIG 6 is performed by the relay when sidelink communication is performed between UE1 and UE2 through a relay. Details of working principles and working modes may be referred to relevant description of the relay in FIG 5, and are not repeated here.

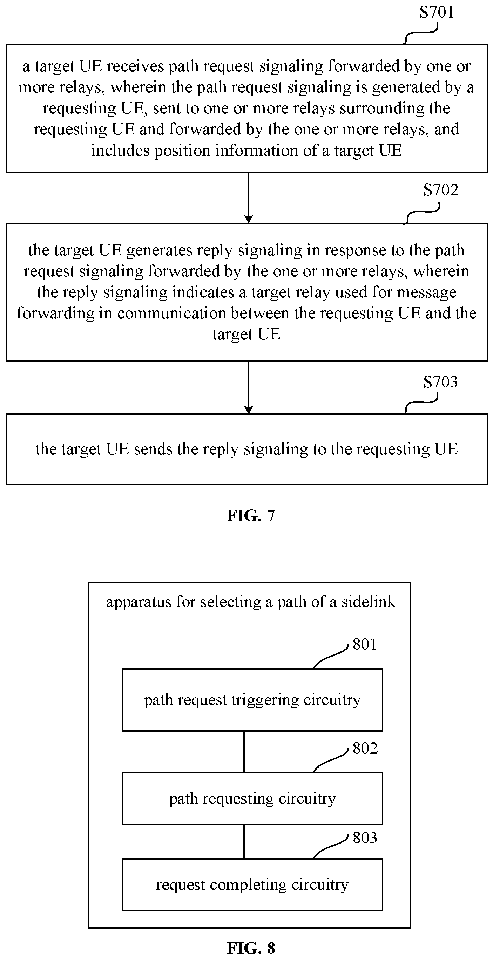

FIG 7 is a flow chart of a method for selecting a path of a sidelink according to an embodiment. The method includes S701, S702 and S703.

In S701, a target UE receives path request signaling forwarded by one or more relays, wherein the path request signaling is generated by a requesting UE, sent to one or more relays surrounding the requesting UE and forwarded by the one or more relays, and includes position information of a target UE.

In S702, the target UE generates reply signaling in response to the path request signaling forwarded by the one or more relays, wherein the reply signaling indicates a target relay used for message forwarding in communication between the requesting UE and the target UE.

In S703, the target UE sends the reply signaling to the requesting UE.

The relay receiving the path request signaling determines whether to forward the path request signaling at least based on the position information of the target UE.

Optionally, the position information of the target UE includes longitude and latitude information of the target UE and/or a zone ID of the target UE in the sidelink.

Optionally, the method further includes: selecting at least one relay from the one or more relays as the target relay.

Optionally, the at least one relay is selected from the one or more relays as the target relay based on quality of a link with each of the one or more relays.

The method as shown in FIG 7 is performed by the target UE (i.e., UE2) when sidelink communication is performed between UE1 and UE2 through a relay. Details of working principles and working modes may be referred to relevant description of the target UE in FIG 5, and are not repeated here.

FIG 8 is a structural diagram of an apparatus for selecting a path of a sidelink according to an embodiment.

The apparatus includes: a path request triggering circuitry 801 configured to generate path request signaling, wherein the path request signaling includes position information of a target UE; a path requesting circuitry 802 configured to send the path request signaling to one or more surrounding relays, so that at least one relay that receives the path request signaling determines whether to forward the path request signaling at least based on the position information of the target UE; and a request completing circuitry 803 configured to receive reply signaling from the target UE, wherein the reply signaling is generated by the target UE in response to the path request signaling forwarded by each of the at least one relay, and indicates a target relay used for message forwarding in communication with a requesting UE.

Details of working principles and working modes of the apparatus may be referred to relevant description of FIG 5, and are not repeated here.

In some embodiments, the above-mentioned apparatus may correspond to a chip with a sidelink path selection function in the UE, or to a chip with a data processing function, such as a System-On-Chip (SOC) or a baseband chip, or to a chip module including a chip with a sidelink path selection function in the UE, or to a chip module including a chip with a data processing function, or to the UE.

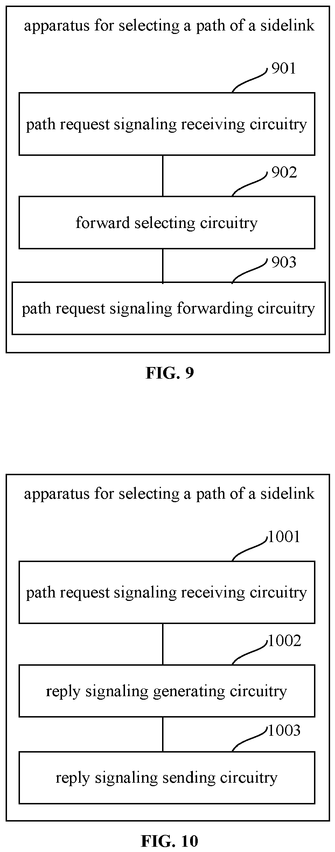

FIG 9 is a structural diagram of an apparatus for selecting a path of a sidelink according to an embodiment.

The apparatus includes: a path request signaling receiving circuitry 901 configured to receive path request signaling sent by a requesting UE, wherein the path request signaling is generated by the requesting UE and sent to one or more relays surrounding the requesting UE, and includes position information of a target UE; a forward selecting circuitry 902 configured to determine whether to forward the path request signaling at least based on the position information of the target UE; a path request signaling forwarding circuitry 903 configured to forward the path request signaling to the target UE based on determining to forward the path request signaling, so that the target UE generates and sends reply signaling in response to the path request signaling, wherein the reply signaling indicates a target relay used for message forwarding in communication between the requesting UE and the target UE.

Details of working principles and working modes of the apparatus may be referred to relevant description of FIG 6, and are not repeated here.

In some embodiments, the above-mentioned apparatus may correspond to a chip with a sidelink path selection function in the relay, or to a chip with a data processing function, such as an SOC or a baseband chip, or to a chip module including a chip with a sidelink path selection function in the relay, or to a chip module including a chip with a data processing function, or to the relay.

FIG 10 is a structural diagram of an apparatus for selecting a path of a sidelink according to an embodiment.

The apparatus includes: a path request signaling receiving circuitry 1001 configured to receive path request signaling forwarded by one or more relays, wherein the path request signaling is generated by a requesting UE, sent to one or more relays surrounding the requesting UE and forwarded by the one or more relays, and includes position information of a target UE; a reply signaling generating circuitry 1002 configured to generate reply signaling in response to the path request signaling forwarded by the one or more relays, wherein the reply signaling indicates a target relay used for message forwarding in communication between the requesting UE and the target UE; and a reply signaling sending circuitry 1003 configured to send the reply signaling to the requesting UE, wherein the relay receiving the path request signaling determines whether to forward the path request signaling at least based on the position information of the target UE.

Details of working principles and working modes of the apparatus may be referred to relevant description of FIG 7, and are not repeated here.

In some embodiments, the above-mentioned apparatus may correspond to a chip with a sidelink path selection function in the UE, or to a chip with a data processing function, such as an SOC or a baseband chip, or to a chip module including a chip with a sidelink path selection function in the UE, or to a chip module including a chip with a data processing function, or to the UE.

Modules/units included in each apparatus and product described in the above embodiments may be software modules/units, hardware modules/units, or a combination of software modules/units and hardware modules/units.

For example, for each apparatus or product applied to or integrated in a chip, each module/unit included therein may be implemented by hardware such as circuits; or, at least some modules/units may be implemented by a software program running on a processor integrated inside the chip, and the remaining (if any) part of the modules/units may be implemented by hardware such as circuits. For each apparatus or product applied to or integrated in a chip module, each module/unit included therein may be implemented by hardware such as circuits. Different modules/units may be disposed in a same component (such as a chip or a circuit module) or in different components of the chip module. Or at least some modules/units may be implemented by a software program running on a processor integrated inside the chip module, and the remaining (if any) part of the modules/units may be implemented by hardware such as circuits. For each apparatus or product applied to or integrated in a terminal, each module/unit included therein may be implemented by hardware such as circuits. Different modules/units may be disposed in a same component (such as a chip or a circuit module) or in different components of the terminal. Or at least some modules/units may be implemented by a software program running on a processor integrated inside the terminal, and the remaining (if any) part of the modules/units may be implemented by hardware such as circuits.

It should be noted that the technical solutions of the present disclosure can be applied to 5G communication systems, 4G and 3G communication systems, and various new communication systems in the future, such as 6G and 7G communication systems.

In an embodiment of the present disclosure, a storage medium having computer instructions stored therein is provided, wherein when the computer instructions are executed, the above method as shown in FIG 5, 6 or 7 is performed. The storage medium may be a computer-readable storage medium, for example, may include a non-volatile memory, a non-transitory memory, an optical disk, a mechanical hard disk, a solid-state disk, and the like.

In the embodiments of the present disclosure, the processor may be a Central Processing Unit (CPU), or other general processors, Digital Signal Processors (DSPs), Application Specific Integrated Circuits (ASICs), Field Programmable Gate Arrays (FPGAs) or other Programmable logic devices, discrete gates or transistor logic devices, discrete hardware components, and the like. A general processor may be a microprocessor or the processor may be any conventional processor or the like.

It should also be understood that the memory in the embodiments of the present disclosure may be either volatile memory or nonvolatile memory, or may include both volatile and nonvolatile memories. The non-volatile memory may be a Read-Only Memory (ROM), a Programmable ROM (PROM), an Erasable PROM (EPROM), an electrically Erasable EPROM (EEPROM), or a flash memory. The volatile memory may be a Random Access Memory (RAM) which functions as an external cache. By way of example but not limitation, various forms of RAM are available, such as Static Random Access Memory (SRAM), Dynamic Random Access Memory (DRAM), Synchronous Dynamic Random Access Memory (SDRAM), Double Data Rate Synchronous Dynamic Random Access Memory (DDR SDRAM), Enhanced SDRAM (ESDRAM), Synchronous connection to DRAM (SLDRAM), and Direct Rambus RAM (DR-RAM).

In an embodiment of the present disclosure, a UE including the apparatus as shown in FIG 8 or 10 or including a memory and a processor is provided, wherein the memory has computer instructions stored therein, and when the processor executes the computer instructions, the above method as shown in FIG 5 or FIG 7 is performed. The terminal may include but not limited to a mobile phone, a computer or a tablet computer.

A terminal in the embodiments of the present disclosure may refer to various forms of UE, access terminal, user unit, user station, Mobile Station (MS), remote station, remote terminal, mobile equipment, user terminal, terminal equipment, wireless communication equipment, user agent or user device. The terminal equipment may further be a cellular phone, a cordless phone, a Session Initiation Protocol (SIP) phone, a Wireless Local Loop (WLL) station, a Personal Digital Assistant (PDA), a handheld device with a wireless communication function, a computing device or other processing devices connected to a wireless modems, an in-vehicle device, a wearable device, a terminal equipment in the future 5G network, or a terminal equipment in a future evolved Public Land Mobile Network (PLMN), which is not limited in the embodiments of the present disclosure.

In an embodiment of the present disclosure, a delay including the apparatus as shown in FIG 9 or including a memory and a processor is provided, wherein the memory has computer instructions stored therein, and when the processor executes the computer instructions, the above method as shown in FIG 6 is performed.

The Base Station (BS) in the embodiments of the present disclosure may also be referred to as a base station equipment, and is an apparatus deployed in a wireless access network to provide wireless communication functions. For example, an equipment that provides a base station function in a 2G network includes a Base Transceiver Station (BTS). An equipment that provides the base station function in a 3G network includes a Node B. An equipment that provides the base station function in a 4G network includes an evolved Node B (eNB). In a Wireless Local Area Network (WLAN), an equipment that provides the base station function is an Access Point (AP). An equipment that provides the base station function in 5G New Radio (NR) includes a gNB and an ng-eNB, where the gNB and the terminal use NR technology to communicate, and the ng-eNB and the terminal use Evolved Universal Terrestrial Radio Access (E-UTRA) technology to communicate. Both the gNB and the ng-eNB can be connected to a 5G core network. The base station also refers to an equipment that provides the base station function in a new communication system in the future.

The base station controller in the embodiments of the present disclosure is a device for managing base stations, such as a Base Station Controller (BSC) in a 2G network, a Radio Network Controller (RNC) in a 3G network, or a device that controls and manages a base station in a new communication system in the future.

The network in the embodiments of the present disclosure refers to a communication network that provides communication services for terminals, including a base station of a radio access network, a BSC of a radio access network, and a device on the core network.

Although the present disclosure has been disclosed above with reference to preferred embodiments thereof, it should be understood that the disclosure is presented by way of example only, and not limitation. Those skilled in the art can modify and vary the embodiments without departing from the spirit and scope of the present disclosure.

## Claims

1. A method for selecting a path of a sidelink, **characterized by** comprising:
generating path request signaling, wherein the path request signaling comprises position information of a target User Equipment (UE);
sending the path request signaling to one or more surrounding relays, so that at least one relay that receives the path request signaling determines whether to forward the path request signaling at least based on the position information of the target UE; and
receiving reply signaling from the target UE, wherein the reply signaling is generated by the target UE in response to the path request signaling forwarded by each of the at least one relay, and indicates a target relay used for message forwarding in communication with a requesting UE.

2. The method according to claim 1, **characterized in that** the position information of the target UE comprises latitude and longitude information of the target UE, and/or a zone ID of the target UE in the sidelink.

3. The method according to claim 1, **characterized in that** the at least one relay that receives the path request signaling determines whether to forward the path request signaling further based on one or more of following conditions:
requirements on quality of service in the path request signaling, a load situation of the relay, and quality of a link between the requesting UE and the relay.

4. The method according to claim 1, **characterized in that** in response to receiving the path request signaling forwarded by a plurality of relays, the target UE determines one or more relays from the plurality of relays as the target relay.

5. The method according to claim 4, **characterized in that** the target UE selects the target relay at least based on quality of a link with each of the plurality of relays.

6. The method according to claim 1, **characterized in that** the path request signaling is generated based on signal strength with the target UE being lower than a signal threshold.

7. The method according to claim 1, **characterized in that** when a plurality of target relays are indicated in the reply signaling, one or more target relays are selected from the plurality of target relays, so as to communicate with the target UE via the selected one or more target relays.

8. A method for selecting a path of a sidelink, **characterized by** comprising:
receiving path request signaling sent by a requesting User Equipment (UE), wherein the path request signaling is generated by the requesting UE and sent to one or more relays surrounding the requesting UE, and comprises position information of a target UE;
determining whether to forward the path request signaling at least based on the position information of the target UE; and
forwarding the path request signaling to the target UE based on determining to forward the path request signaling, so that the target UE generates and sends reply signaling in response to the path request signaling, wherein the reply signaling indicates a target relay used for message forwarding in communication between the requesting UE and the target UE.

9. The method according to claim 8, **characterized in that** the position information of the target UE comprises latitude and longitude information of the target UE and/or a zone ID of the target UE in the sidelink.

10. The method according to claim 8, **characterized by** further comprising:
determining whether to forward the path request signaling based on one or more of following conditions: requirements on quality of service in the path request signaling, a load situation of a current relay, and quality of a link between the requesting UE and the current relay.

11. The method according to claim 8, **characterized in that** following forwarding the path request signaling to the target UE, the method further comprises:
receiving reply signaling from the target UE in response to being selected as the target relay by the target UE; and
forwarding the reply signaling to the requesting UE.

12. A method for selecting a path of a sidelink, **characterized by** comprising:
receiving path request signaling forwarded by one or more relays, wherein the path request signaling is generated by a requesting User Equipment (UE), sent to one or more relays surrounding the requesting UE and forwarded by the one or more relays, and comprises position information of a target UE;
generating reply signaling in response to the path request signaling forwarded by the one or more relays, wherein the reply signaling indicates a target relay used for message forwarding in communication between the requesting UE and the target UE; and
sending the reply signaling to the requesting UE,
wherein the relay receiving the path request signaling determines whether to forward the path request signaling at least based on the position information of the target UE.

13. The method according to claim 12, **characterized in that** the position information of the target UE comprises longitude and latitude information of the target UE and/or a zone ID of the target UE in the sidelink.

14. The method according to claim 12, **characterized by** further comprising:
selecting at least one relay from the one or more relays as the target relay.

15. The method according to claim 14, **characterized in that** the at least one relay is selected from the one or more relays as the target relay based on quality of a link with each of the one or more relays.

16. An apparatus for selecting a path of a sidelink, **characterized by** comprising:
a path request triggering circuitry configured to generate path request signaling, wherein the path request signaling comprises position information of a target User Equipment (UE);
a path requesting circuitry configured to send the path request signaling to one or more surrounding relays, so that at least one relay that receives the path request signaling determines whether to forward the path request signaling at least based on the position information of the target UE; and
a request completing circuitry configured to receive reply signaling from the target UE, wherein the reply signaling is generated by the target UE in response to the path request signaling forwarded by each of the at least one relay, and indicates a target relay used for message forwarding in communication with a requesting UE.

17. An apparatus for selecting a path of a sidelink, **characterized by** comprising:
a path request signaling receiving circuitry configured to receive path request signaling sent by a requesting User Equipment (UE), wherein the path request signaling is generated by the requesting UE and sent to one or more relays surrounding the requesting UE, and comprises position information of a target UE;
a forward selecting circuitry configured to determine whether to forward the path request signaling at least based on the position information of the target UE; and
a path request signaling forwarding circuitry configured to forward the path request signaling to the target UE based on determining to forward the path request signaling, so that the target UE generates and sends reply signaling in response to the path request signaling, wherein the reply signaling indicates a target relay used for message forwarding in communication between the requesting UE and the target UE.

18. An apparatus for selecting a path of a sidelink, **characterized by** comprising:
a path request signaling receiving circuitry configured to receive path request signaling forwarded by one or more relays, wherein the path request signaling is generated by a requesting User Equipment (UE), sent to one or more relays surrounding the requesting UE and forwarded by the one or more relays, and comprises position information of a target UE;
a reply signaling generating circuitry configured to generate reply signaling in response to the path request signaling forwarded by the one or more relays, wherein the reply signaling indicates a target relay used for message forwarding in communication between the requesting UE and the target UE; and
a reply signaling sending circuitry configured to send the reply signaling to the requesting UE,
wherein the relay receiving the path request signaling determines whether to forward the path request signaling at least based on the position information of the target UE.

19. A storage medium having computer instructions stored therein, **characterized in that** when the computer instructions are executed by a processor, the method of any one of claims 1 to 7, the method of any one of claims 8 to 11, or the method of any one of claims 12 to 15 is performed.

20. A User Equipment (UE), comprising the apparatus of claim 16 or 18, or comprising a memory and a processor, **characterized in that** the memory has computer instructions stored therein, and when the processor executes the computer instructions, the method of any one of claims 1 to 7, or the method of any one of claims 12 to 15 is performed.

21. A relay, comprising the apparatus of claim 17, or comprising a memory and a processor, **characterized in that** the memory has computer instructions stored therein, and when the processor executes the computer instructions, the method of any one of claims 8 to 11 is performed.
